# EUROPÄISCHE PATENTSCHRIFT

(11) **EP 3 374 113 B1**
(45) Veröffentlichungstag und Bekanntmachung des Hinweises auf die Patenterteilung: **25.12.2019**
(21) Anmeldenummer: 16791605.5
(22) Anmeldetag: 08.11.2016
(51) Int. Cl.: B23C 5/10

(54) **ZERSPANUNGSWERKZEUG**
MACHINING TOOL
OUTIL D'USINAGE PAR ENLÈVEMENT DE COPEAUX

(30) Priorität: 10.11.2015 DE 202015106056 U
(43) Veröffentlichungstag der Anmeldung: 19.09.2018
(73) Patentinhaber: Albert Knebel Holding GmbH, 72336 Balingen (DE)
(72) Erfinder: WÖRMANN, Philipp, 33397 Rietberg (DE); HERMBUSCHE, Günter, 33161 Hövelhof/Riege (DE)
(74) Vertreter: Kohler Schmid Möbus Patentanwälte
(86) Internationale Anmeldenummer: PCT/EP2016/076955
(87) Internationale Veröffentlichungsnummer: WO 2017/080990

(56) Entgegenhaltungen:
- DE-A1-102011 103 189
- JP-A- S5 919 618
- JP-A- S6 420 913
- US-A- 2 918 955
- US-A- 3 798 723
- US-A- 3 913 196
- US-A- 4 475 850
- US-A- 5 221 163
- US-A1- 2015 251 253

## Beschreibung

Die Erfindung betrifft ein Zerspanungswerkzeug zur spanenden Bearbeitung von faserverstärkten Werkstoffen gemäß dem Oberbegriff des Anspruchs 1. Ein solches Zerspanungswerkzeug ist beispielsweise aus der US 4,475,850 bekannt.

Ein Zerspanungswerkzeug ist beispielsweise aus der WO2014/056582 A1 bekannt geworden. Das dort beschriebene Zerspanungswerkzeug hat eine Mehrzahl von Spannuten, welche um ein Zylinderkernsegment herum platzierte Stege in Umfangsrichtung voneinander beabstanden. Dabei ist zumindest einer der Stege als Vorbearbeitungssteg und zumindest ein anderer der Stege als Nachbearbeitungssteg ausgebildet, welche jeweils einen sich entlang oder mit Drall spiralsegmentförmig um die Werkzeugachse des Zerspanungswerkzeugs erstreckenden, umfangsseitigen Arbeitsbereich aufweisen. Im Arbeitsbereich jedes Nachbearbeitungsstegs ist eine Anzahl sich parallel zu oder mit Drall spiralsegmentförmig um die Werkzeugachse erstreckender, scharfer Schneiden vorgesehen. Die Anzahl scharfer Schneiden an zumindest einem Nachbearbeitungssteg umfasst eine Mehrzahl von jeweils an einer umfangsseitigen Mantelrille vorgesehenen Schneiden, wobei die Mantelrillen parallel zueinander und mit Steigung zur dem zumindest einen Nachbearbeitungssteg vorlaufenden Spannut in eine zylinderoberflächensegmentförmige Mantelfläche des Arbeitsbereichs eingearbeitet sind.

Bei der Zerspanung von faserverstärkten Werkstoffen, wie beispielsweise CFK oder GFK, stehen Schnittqualität und Laufruhe im Zielkonflikt. Maßnahmen, die die Schnittqualität verbessern, bringen als Nebeneffekt eine schlechtere Laufruhe mit sich. Wird zur Verbesserung der Schnittqualität mit gegenläufigem Spiralwinkel gearbeitet und weist der Spiralwinkel einen Wert von betragsmäßig über 30° auf, verbessert sich die Schnittqualität und die Kantenqualität. Dies bringt eine Kraftrichtungsänderung mit sich. Aufgrund der Richtungsänderung der Kräfte findet eine Schwingungsanregung des Werkstücks statt. Begünstigt wird die Anregung durch eine konstante Anregungsfrequenz sowie durch konstante Richtungen der Anregungskräfte.

Aufgabe der vorliegenden Erfindung ist es deshalb, ein Zerspanungswerkzeug bereitzustellen, mit dem sowohl Schnittqualität als auch Laufruhe verbessert werden können.

Gelöst wird diese Aufgabe erfindungsgemäß durch ein Zerspanungswerkzeug mit den Merkmalen des Anspruchs 1.

Erfindungsgemäß weisen alle Schneiden eines Flügels unterschiedliche Spiralwinkel auf. Dadurch ergibt sich eine Streuung in Richtung der Kraftvektoren an den einzelnen Schneiden, sodass die Laufruhe weiter verbessert werden kann.

Gemäß einer Ausgestaltung der Erfindung kann vorgesehen sein, dass die Schneiden eines ersten Flügels einen positiven Spiralwinkel und die Schneiden eines in Umfangsrichtung folgenden Flügels einen negativen Spiralwinkel - oder umgekehrt - aufweisen. Durch diese Maßnahme kann die Schnittqualität, insbesondere von schmalen Flächen, also sehr dünnen Plattenmaterialien oder dünnen Freiformteilen, verbessert werden. Weitere Vorteile ergeben sich, wenn an einem Flügel eine erste Gruppe von Schneiden vorgesehen ist, die jeweils einen Spiralwinkel aufweisen, der betragsmäßig kleiner als ein erster vorgegebener Spiralwinkel ist, und eine zweite Gruppe von Schneiden vorgesehen ist, die jeweils einen Spiralwinkel aufweisen, der betragsmäßig größer ist als ein zweiter vorgegebener Spiralwinkel, wobei der zweite vorgegebene Spiralwinkel betragsmäßig größer oder gleich dem ersten vorgegebenen Spiralwinkel ist. Durch diese Streuung der Spiralwinkel kann die Schwingungsanregung eines Bauteils reduziert werden, wodurch sich eine verbesserte Laufruhe ergibt.

Eine Konsequenz der Erfindung ist, dass alle Schneiden einer Gruppe unterschiedliche Spiralwinkel aufweisen. Die Streuung in der Richtung der Kraftvektoren wird dadurch nochmals vergrößert.

In Längsrichtung des Zerspanungswerkzeugs können abwechselnd Schneiden der ersten und zweiten Gruppe angeordnet sein. Durch diese Maßnahme wird sichergestellt, dass die Richtungen der Kraftvektoren von benachbarten Schneiden deutlich voneinander abweichen.

Weitere Vorteile ergeben sich, wenn die Differenz des ersten und zweiten vorgegebenen Spiralwinkels größer ist als die Differenz beliebiger zweier Spiralwinkel innerhalb einer Gruppe. Die Spiralwinkel von Schneiden einer Gruppe liegen somit relativ nahe beieinander, während die Spiralwinkel von Schneiden unterschiedlicher Gruppen einen relativ großen Abstand zueinander aufweisen.

An jedem Flügel können ausschließlich Schneiden mit positivem Spiralwinkel oder ausschließlich Schneiden mit negativem Spiralwinkel angeordnet sein.

Gemäß einer weiteren Ausführungsform der Erfindung kann auch vorgesehen sein, dass an einem Flügel Schneiden mit positiven und negativen Spiralwinkeln angeordnet sind. Insbesondere können sich Schneiden mit positivem und negativem Spiralwinkel an einem Flügel abwechseln. Besonders bevorzugt ist es, wenn sich zumindest eine Schneide mit positivem und eine Schneide mit negativem Spiralwinkel schneiden.

Jeder Schneide kann ein Spanraum und eine Freifläche zugeordnet sein. Dadurch wird ein zuverlässiger Abtransport von Spänen sichergestellt.

Die Schneidkante zumindest einer Schneide kann mit einer Rundschlifffase ausgebildet sein. Dies führt zu einer Verbesserung des Standwegs.

Weitere Vorteile ergeben sich, wenn zwischen zwei durch eine Spannut beabstandeten Flügeln eine oder mehrere Schneiden mit einem Winkel zur Längsachse des Zerspanungswerkzeugs im Bereich - 15° bis + 15°, vorzugsweise im Bereich - 10° bis + 10°, vorgesehen sind. Diese Schneiden wirken sich positiv auf die Laufruhe des Werkzeugs aus. Gleichzeitig verschlechtert sich die Schnittqualität marginal. Diese zusätzlichen Schneiden erhöhen die Zahnzahl des Werkzeugs, dadurch sind höhere Vorschübe erzielbar. Als weiterer positiver Effekt ist eine Verbesserung der Spanförderung in Richtung Absaugung zu nennen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine perspektivische Darstellung des Schneidabschnitts eines Zerspanungswerkzeugs;
- Fig. 2: eine Abwicklung von Schneidkanten von Schneiden;
- Fig. 3: eine Darstellung des Schneidabschnitts eines Zerspanungswerkzeugs zur Darstellung unterschiedlicher Kraftvektoren;
- Fig. 4: eine weitere Darstellung von Abwicklungen von Schneidkanten zur Darstellung unterschiedlicher Gruppen von Schneidkanten mit unterschiedlichen Spiralwinkeln;
- Fig. 5: den Schneidabschnitt eines Zerspanungswerkzeugs mit Schneiden mit positivem und negativem Spiralwinkel;
- Fig. 6: eine perspektivische Darstellung eines Schneidabschnitts eines Zerspanungswerkzeugs mit einer Schneide zwischen den Flügeln des Zerspanungswerkzeugs;
- Fig. 7: Schneiden mit zugeordneten Schneidkanten, Spanraum und Freifläche.

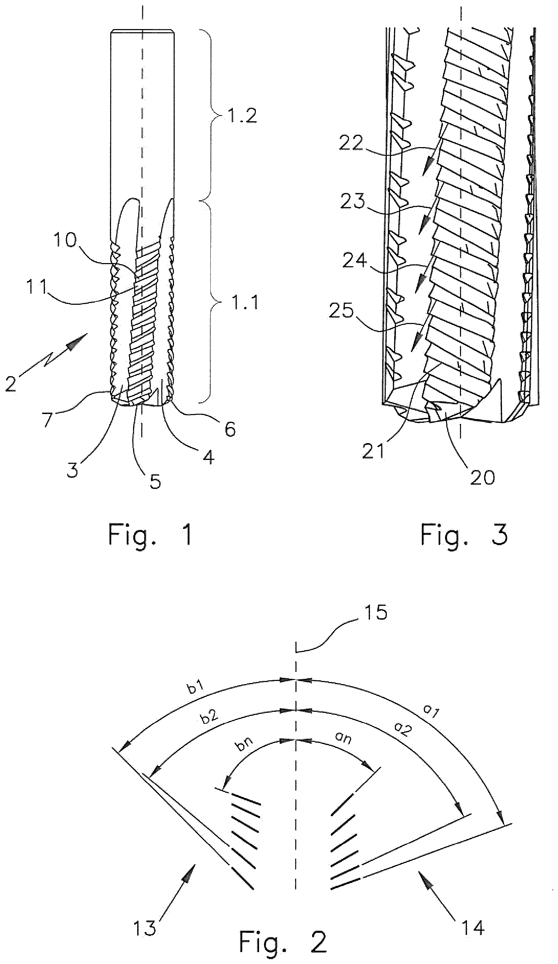

Die Fig. 1 zeigt den Schneidabschnitt 1.1 eines Zerspanungswerkzeugs 2. Oben schließt sich an den Schneidabschnitt 1.1 ein weiterer Abschnitt 1.2 an, mit dem das Zerspanungswerkzeug 2 eingespannt werden kann.

Das Zerspanungswerkzeug 2 ist im Wesentlichen zylindrisch ausgestaltet. Es weist Spannuten 3, 4 auf, die Flügel 5, 6, 7 voneinander beabstanden. Anhand des Flügels 5 ist dargestellt, dass die Flügel 5 bis 7 umfangsseitig Schneiden 10 aufweisen. Die Schneiden 10 sind durch Nuten 11 voneinander beabstandet.

Die Fig. 2 zeigt eine Abwicklung von Schneidkanten 13, 14 von Schneiden, wie beispielsweise der Schneide 10. Die Schneidkanten 14 weisen einen positiven Spiralwinkel a1, a2, an auf. Dies bedeutet, dass die Winkel a1, a2, an zur Längsachse 15 des Zerspanungswerkzeugs 2 positiv sind. Sämtliche Schneiden mit ihren zugeordneten Schneidkanten 14 weisen unterschiedliche Spiralwinkel a1, a2, an auf. Dies bedeutet, dass a1 ≠ a2 ≠ an ist.

Die Schneiden mit den Schneidkanten 13 weisen entsprechend einen negativen Spiralwinkel b1, b2, bn auf. Auch hier gilt b1 ≠ b2 ≠ bn. Dies bedeutet, dass es keine Schneiden gibt, deren Schneidkanten parallel verlaufen. Die Schneidkanten 13 mit dem negativen Spiralwinkel b1, b2, bn können an einem ersten Flügel angeordnet sein und die Schneiden mit zugeordneten Schneidkanten 14 können an einem benachbarten Flügel angeordnet sein. Somit sind durch eine Spannut 3, 4 beabstandete Flügel 5 bis 7 mit Schneiden mit vorzeichenmäßig unterschiedlichen Spiralwinkeln versehen.

In der Fig. 3 ist ein Flügel 20 dargestellt, der Schneiden 21 mit negativen Spiralwinkeln b1, b2, bn aufweist. Dadurch ergeben sich von Schneide zu Schneide unterschiedliche Richtungen der Kraftvektoren 22, 23, 24, 25. Dadurch wird die Laufruhe verbessert.

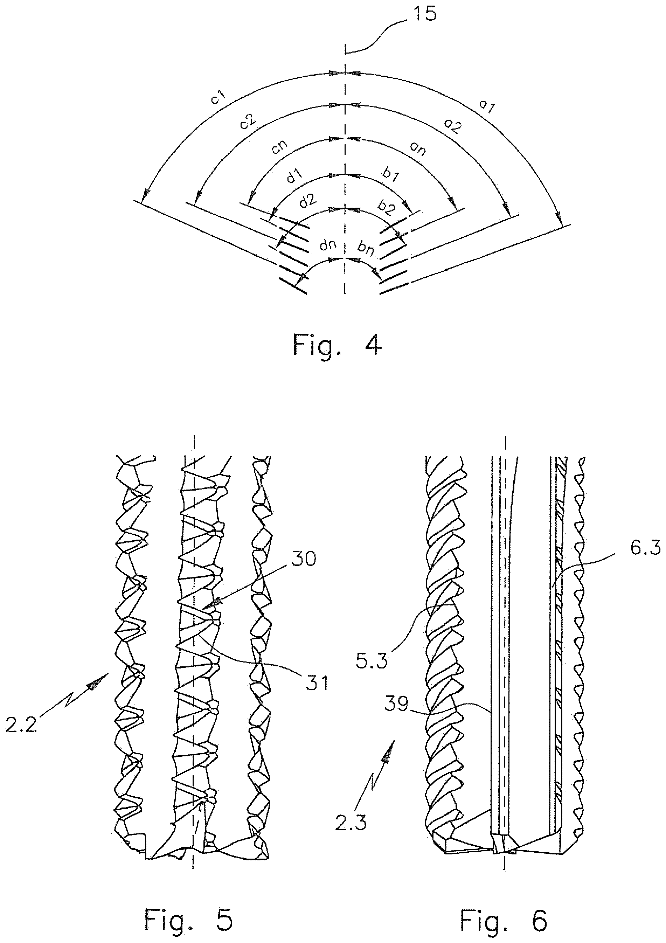

In der Fig. 4 ist eine weitere Ausführungsform gezeigt, wobei hier ebenfalls Abwicklungen von Schneidkanten von Schneiden dargestellt sind. Ein erster Flügel weist Schneiden mit einem negativen Spiralwinkel c1 bis cn und d1 bis dn auf. Der folgende Flügel weist positive Spiralwinkel a1 bis an und b1 bis bn auf. Auf jedem Flügel sind Schneiden zweier Gruppen abwechselnd angeordnet. Innerhalb jeder Gruppe a, b, c, d sind alle Spiralwinkel unterschiedlich (a1 ≠ a2 ≠ an; b1 ≠ b2 ≠ bn; c1 ≠ c2 ≠cn; d1 ≠ d2 ≠ dn). Die beiden Gruppen je Flügel weisen eine höhere Differenz zwischen den Spiralwinkeln auf als die Differenz der Spiralwinkel innerhalb einer Gruppe. Aus dieser Konstellation ergibt sich eine Streuung in Richtung der Kraftvektoren.

Insbesondere ist dabei vorgesehen, dass die Spiralwinkel c1, c2, cn betragsmäßig größer sind als ein vorgegebener erster Spiralwinkel und die Spiralwinkel d1, d2, dn betragsmäßig kleiner sind als ein vorgegebener zweiter Spiralwinkel. Die vorgegebenen Spiralwinkel können gleich oder unterschiedlich sein. Wenn unterschiedliche vorgegebene Spiralwinkel vorgesehen sind, ist der vorgegebene Spiralwinkel, der kleiner ist als c1, c2, cn größer als der vorgegebene Spiralwinkel, der größer ist als die Spiralwinkel d1, d2, dn.

Entsprechendes gilt für die Spiralwinkel a1, a2, an und b1, b2, bn.

Die Fig. 5 zeigt eine weitere Ausführungsform eines Zerspanungswerkzeugs 2.2, bei dem auf einem Flügel Schneiden 30 mit einem positiven Spiralwinkel und Schneiden 31 mit einem negativen Spiralwinkel angeordnet sind. Sämtliche Spiralwinkel sind betragsmäßig größer als 30°. Schneiden 30, 31 mit positivem und negativem Spiralwinkel können sich schneiden.

Bei der Ausführungsform eines Zerspanungswerkzeugs 2.3 gemäß der Fig. 6 ist zwischen dem Flügel 5.3 und dem Flügel 6.3 eine weitere Schneide 39 angeordnet, die einen Winkel zur Längsachse des Zerspanungswerkzeugs 2.3 im Bereich zwischen - 10° und + 10° aufweist. Im gezeigten Ausführungsbeispiel weist sie insbesondere einen Winkel von 0° zur Längsachse des Zerspanungswerkzeugs 2.3 auf.

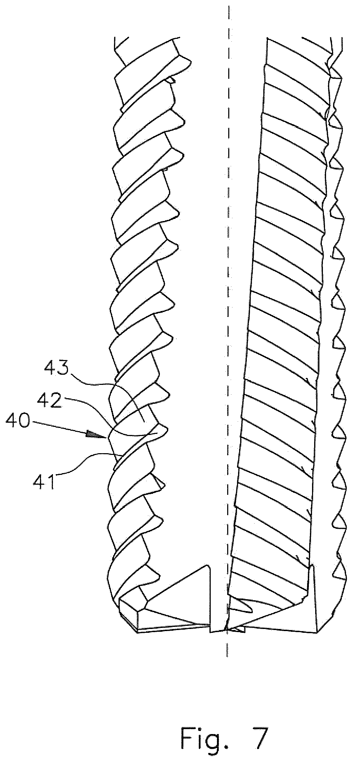

Der Fig. 7 lässt sich entnehmen, dass jeder Schneide 40 eine Schneidkante 41, ein Spanraum 42 und eine Freifläche 43 zugeordnet ist.

## Patentansprüche

1. Zerspanungswerkzeug (2, 2.2, 2.3) zur spanenden Bearbeitung von faserverstärkten Werkstoffen, mit einer Mehrzahl von Spannuten (3, 4), welche Flügel (5, 6, 7, 20, 5.3, 6.3) in Umfangsrichtung voneinander beabstanden, wobei zumindest ein Flügel (5, 6, 7, 20, 5.3, 6.3) an seiner Umfangsseite mehrere Schneiden (10, 21, 30, 31, 39) aufweist, die einen Spiralwinkel (a1 - an, b1 - bn, c1 - cn, d1 - dn) zur Längsachse (15) des Zerspanungswerkzeugs (2, 2.2, 2.3) von betragsmäßig >25° aufweisen, wobei an dem zumindest einen Flügel (5, 6, 7, 20, 5.3, 6.3) zumindest zwei Schneiden (10, 21, 30, 31, 39) unterschiedliche Spiralwinkel (a1 - an, b1 - bn, c1 - cn, d1 - dn) aufweisen, **dadurch gekennzeichnet, dass** alle Schneiden (10, 21, 30, 31, 39) eines Flügels (5, 6, 7, 20, 5.3, 6.3) unterschiedliche Spiralwinkel (a1 - an, b1 - bn, c1 - cn, d1 - dn) aufweisen.

2. Zerspanungswerkzeug nach Anspruch 1, **dadurch gekennzeichnet, dass** die Schneiden (10, 21, 30, 31, 39) eines ersten Flügels (5, 6, 7, 20, 5.3, 6.3) einen positiven Spiralwinkel (a1 - an) und die Schneiden eines in Umfangsrichtung folgenden Flügels einen negativen Spiralwinkel (b1 - bn) - oder umgekehrt - aufweisen.

3. Zerspanungswerkzeug nach einem der vorhergehenden Ansprüche, **dadurch gekennzeichnet, dass** an einem Flügel (5, 6, 7, 20, 5.3, 6.3) eine erste Gruppe (b, d) von Schneiden vorgesehen ist, die jeweils einen Spiralwinkel (b1 - bn, d1 - dn) aufweisen, der betragsmäßig kleiner als ein erster vorgegebener Spiralwinkel ist, und eine zweite Gruppe (a, c) von Schneiden vorgesehen ist, die jeweils einen Spiralwinkel (a1 - an, c1 - cn) aufweisen, der betragsmäßig größer ist als ein zweiter vorgegebener Spiralwinkel, wobei der zweite vorgegebene Spiralwinkel betragsmäßig größer oder gleich dem ersten vorgegebenen Spiralwinkel ist.

4. Zerspanungswerkzeug nach Anspruch 3, **dadurch gekennzeichnet, dass** alle Schneiden (13, 14) einer Gruppe (a, b, c, d) unterschiedliche Spiralwinkel (a1 - an, b1 - bn, c1 - cn, d1 - dn) aufweisen.

5. Zerspanungswerkzeug nach einem der Ansprüche 3 oder 4, **dadurch gekennzeichnet, dass** in Längsrichtung des Zerspanungswerkzeugs abwechselnd Schneiden der ersten und zweiten Gruppe (a, b, c, d) angeordnet sind.

6. Zerspanungswerkzeug nach einem der vorhergehenden Ansprüche 3 bis 5, **dadurch gekennzeichnet, dass** die Differenz des ersten und zweiten vorgegebenen Spiralwinkels größer ist als die Differenz beliebiger zweier Spiralwinkel (a1 - an, b1 - bn, c1 - cn, d1 - dn) innerhalb einer Gruppe (a, b, c, d).

7. Zerspanungswerkzeug nach einem der vorhergehenden Ansprüche, **dadurch gekennzeichnet, dass** an einem Flügel Schneiden (30, 31) mit positiven und negativen Spiralwinkeln angeordnet sind.

8. Zerspanungswerkzeug nach Anspruch 7, **dadurch gekennzeichnet, dass** sich zumindest eine Schneide (30, 31) mit positivem und eine Schneide mit negativem Spiralwinkel schneiden.

9. Zerspanungswerkzeug nach einem der vorhergehenden Ansprüche, **dadurch gekennzeichnet, dass** jeder Schneide (40) ein Spanraum (42) und eine Freifläche (43) zugeordnet sind.

10. Zerspanungswerkzeug nach einem der vorhergehenden Ansprüche, **dadurch gekennzeichnet, dass** die Schneidkante zumindest einer Schneide mit einer Rundschlifffase ausgebildet wird.

11. Zerspanungswerkzeug nach einem der vorhergehenden Ansprüche, **dadurch gekennzeichnet, dass** zwischen zwei durch eine Spannut beabstandeten Flügeln (5.3, 6.3) eine oder mehrere Schneiden (39) mit einem Winkel zur Längsachse des Zerspanungswerkzeugs im Bereich -15° bis +15°, vorzugsweise im Bereich -10° bis +10°, vorgesehen ist.

## Claims

1. Cutting tool (2, 2.2, 2.3) for machining fibre-reinforced materials, with a plurality of flutes (3, 4), which space out blades (5, 6, 7, 20, 5.3, 6.3) from each other in the circumferential direction, in which at least one blade (5, 6, 7, 20, 5.3, 6.3) has several cutters (10, 21, 30, 31, 39) on its circumferential side, which have a helix angle (a1 - an, b1 - bn, c1 - cn, d1 - dn) to the longitudinal axis (15) of the cutting tool (2, 2.2, 2.3) of >25° according to amount, in which at least two cutters (10, 21, 30, 31, 39) have different helix angles (a1 - an, b1 - bn, c1 - cn, d1 - dn) on the at least one blade (5, 6, 7, 20, 5.3, 6.3), **characterised in that** all the cutters (10, 21, 30, 31, 39) of a blade (5, 6, 7, 20, 5.3, 6.3) have different helix angles (a1 - an, b1 - bn, c1 - cn, d1 - dn).

2. Cutting tool according to claim 1, **characterised in that** the cutters (10, 21, 30, 31, 39) of a first blade (5, 6, 7, 20, 5.3, 6.3) have a positive helix angle (a1 - an) and the cutters of a following blade in the circumferential direction have a negative helix angle (b1 - bn) - or vice versa.

3. Cutting tool according to one of the previous claims, **characterised in that** on a blade (5, 6, 7, 20, 5.3, 6.3) a first group (b, d) of cutters is provided, which have a helix angle (b1 - bn, d1 - dn), which is smaller than a first preset helix angle according to amount, and a second group (a, c) of cutters is provided, which have a helix angle (a1 - an, c1 - cn), which is larger than a second preset helix angle according to amount, in which the second preset helix angle is larger or the same as the first preset helix angle according to amount.

4. Cutting tool according to claim 3, **characterised in that** all the cutters (13, 14) of a group (a, b, c, d) have different helix angles (a1 - an, b1 - bn, c1 - cn, d1 - dn).

5. Cutting tool according to one of claims 3 or 4, **characterised in that** cutters of the first and second group (a, b, c, d) are arranged alternating in the longitudinal direction of the cutting tool.

6. Cutting tool according to one of previous claims 3 to 5, **characterised in that** the difference between the first and second preset helix angles is greater than the difference between any two helix angles (a1 - an, b1 - bn, c1 - cn, d1 - dn) within a group (a, b, c, d).

7. Cutting tool according to one of the previous claims, **characterised in that** cutters (30, 31) with positive and negative helix angles are arranged on a blade.

8. Cutting tool according to claim 7, **characterised in that** at least one cutter (30, 31) with a positive helix angle and one cutter with a negative helix angle intersect.

9. Cutting tool according to one of the previous claims, **characterised in that** a chip space (42) and an open space (43) are assigned to each cutter (40).

10. Cutting tool according to one of the previous claims, **characterised in that** the cutting edge of at least one cutter is made with a circular grinding chamfer.

11. Cutting tool according to one of the previous claims, **characterised in that** one or several cutters (39) with an angle to the longitudinal axis of the cutting tool in the range of -15° to +15°, preferably in the range of -10° to +10°, are provided between two blades (5.3, 6.3) spaced out by a flute.

## Revendications

1. Outil d'enlèvement de copeaux (2, 2.2, 2.3) pour un usinage par enlèvement de copeaux de matériaux renforcés par des fibres, avec une pluralité de goujures (3, 4), qui espacent des listels (5, 6, 7, 20, 5.3, 6.3) les uns des autres dans une direction circonférentielle, dans lequel au moins un listel (5, 6, 7, 20, 5.3, 6.3) présente sur son côté périphérique plusieurs tranchants (10, 21, 30, 31, 39), qui présentent un angle d'hélice (a1 - an, b1 - bn, c1 - cn, d1 - dn) par rapport à l'axe longitudinal (15) de l'outil d'enlèvement de copeaux (2, 2.2, 2.3) d'une valeur > 25° en quantité, dans lequel sur l'au moins un listel (5, 6, 7, 20, 5.3, 6.3), au moins deux tranchants (10, 21, 30, 31, 39) présentent différents angles d'hélice (a1 - an, b1 - bn, c1 - cn, d1 - dn), **caractérisé en ce que** tous les tranchants (10, 21, 30, 31, 39) d'un listel (5, 6, 7, 20, 5.3, 6.3) présentent différents angles d'hélice (a1 - an, b1 - bn, c1 - cn, d1 - dn).

2. Outil d'enlèvement de copeaux selon la revendication 1, **caractérisé en ce que** les tranchants (10, 21, 30, 31, 39) d'un premier listel (5, 6, 7, 20, 5.3, 6.3) présentent un angle d'hélice positif (a1 - an) et les tranchants d'un listel suivant dans une direction circonférentielle présentent un angle d'hélice négatif (b1 - bn) - ou inversement.

3. Outil d'enlèvement de copeaux selon l'une quelconque des revendications précédentes, **caractérisé en ce qu'**un premier groupe (b, d) de tranchants est prévu sur un listel (5, 6, 7, 20, 5.3, 6.3), qui présentent chacun un angle d'hélice (b1 - bn, d1 - dn) dont la valeur est inférieure en quantité à un premier angle d'hélice prédéterminé, et un second groupe (a, c) de tranchants est prévu, qui présentent chacun un angle d'hélice (a1 - an, c1 - cn), dont la valeur est supérieure en quantité à un second angle d'hélice prédéterminé, dans lequel le second angle d'hélice prédéterminé est de valeur supérieure ou égale au premier angle d'hélice prédéterminé.

4. Outil d'enlèvement de copeaux selon la revendication 3, **caractérisé en ce que** tous les tranchants (13, 14) d'un groupe (a, b, c, d) présentent différents angles d'hélice (a1 - an, b1 - bn, c1 - cn, d1 - dn).

5. Outil d'enlèvement de copeaux selon l'une quelconque des revendications 3 ou 4, **caractérisé en ce que** dans la direction longitudinale de l'outil d'enlèvement de copeaux, des tranchants des premier et second groupes (a, b, c, d) sont agencés en alternance.

6. Outil d'enlèvement de copeaux selon l'une quelconque des revendications précédentes 3 à 5, **caractérisé en ce que** la différence entre le premier et le second angle d'hélice prédéterminés est supérieure à la différence entre deux angles d'hélice quelconques (a1 - an, b1 - bn, c1 - cn, d1 - dn) au sein d'un groupe (a, b, c, d).

7. Outil d'enlèvement de copeaux selon l'une quelconque des revendications précédentes, **caractérisé en ce que** des tranchants (30, 31) sont agencés sur un listel, avec des angles d'hélice positif et négatif.

8. Outil d'enlèvement de copeaux selon la revendication 7, **caractérisé en ce qu'**au moins un tranchant (30, 31) avec un angle d'hélice positif et un tranchant avec un angle d'hélice négatif se recoupent.

9. Outil d'enlèvement de copeaux selon l'une quelconque des revendications précédentes, **caractérisé en ce que** chaque tranchant (40) est associé à un logement de copeaux (42) et à une surface libre (43).

10. Outil d'enlèvement de copeaux selon l'une quelconque des revendications précédentes, **caractérisé en ce que** l'arête tranchante est réalisée d'au moins un tranchant avec un chanfrein de rectification cylindrique.

11. Outil d'enlèvement de copeaux selon l'une quelconque des revendications précédentes, **caractérisé en ce qu'**un ou plusieurs tranchants (39), avec un angle dans la plage de -15° à +15°, de préférence dans la plage de -10° à + 10° par rapport à l'axe longitudinal de l'outil d'enlèvement de copeaux, est prévu entre deux listels (5.3, 6.3) espacés par une goujure.
